Europäisches Patentamt

European Patent Office

Office européen des brevets

(11) Publication number: **0 253 240 B1**

(12) **EUROPEAN PATENT SPECIFICATION**

(45) Date of publication of patent specification: **25.03.92**

(51) Int. Cl.⁵: **G07G 1/00**, G07F 7/02

(21) Application number: **87109623.6**

(22) Date of filing: **03.07.87**

(54) POS Terminal device.

(30) Priority: **03.07.86 JP 157545/86**
**12.01.87 JP 5281/87**
**14.01.87 JP 7240/87**

(43) Date of publication of application:
**20.01.88 Bulletin 88/03**

(45) Publication of the grant of the patent:
**25.03.92 Bulletin 92/13**

(84) Designated Contracting States:
**AT BE CH DE ES FR GB GR IT LI LU NL SE**

(56) References cited:
**DE-A- 2 536 648**
**FR-A- 2 574 962**
**GB-A- 2 094 532**

**PATENT ABSTRACTS OF JAPAN, vol. 4, no. 82 (P-15)[564], 13th June 1980, page 153 P 15; & JP-A-55 47 560 (TOKYO DENKI K.K.) 04-04-1980**

**PATENT ABSTRACTS OF JAPAN, vol. 1, no. 80, 27th July 1977, page 1445 E 77; & JP-A-52 16 941 (TATEISHI DENKI K.K.) 08-02-1977**

(73) Proprietor: **OMRON TATEISI ELECTRONICS CO.**
**10, Tsuchido-cho Hanazono Ukyo-ku Kyoto-shi Kyoto-fu(JP)**

(72) Inventor: **Shinjo, Shoji Omron Tateisi Electronics Co**
**Patent Center 20, Igadera Shimo-Kaiinji Nagaokakyo-City Kyoto 617(JP)**
Inventor: **Nakashima, Toyoshiro Omron Tateisi Electronics Co**
**Patent Center 20, Igadera Shimo-Kaiinji Nagaokakyo-City Kyoto 617(JP)**
Inventor: **Nakano, Tetsuyuki Omron Tateisi Electronics Co.**
**Patent Center 20, Igadera Shimo-Kaiinji Nagaokakyo-City Kyoto 617(JP)**

(74) Representative: **WILHELMS, KILIAN & PARTNER Patentanwälte**
**Eduard-Schmid-Strasse 2**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a POS (point of sale) terminal device, and more particularly to such a POS terminal that provides a customer with a credit in the form of a discount or refund according to an accumulated sales amount.

Conventionally, some stores and supermarkets offer a customer such services as a refund, a discount, or a gift by issuing coupons, stamps, or the like according to a sales amount. A local supermarket, for example, may provide a refund to a customer according to a total annual sales amount based on a summation of the sales amount of each transaction receipt for a year. These conventional ways for offering such services, however, causes significant burdens both to a store and a customer in terms of managing and calculating a number of coupons, stamps, and/or receipts having sales amounts printed thereon.

A POS terminal device according to the preamble of claim 1 is known from FR-A-2 574 962.

A POS terminal device comprising means for determining an amount of money to be credited to a customer based on the data representing accumulated sales is disclosed in PATENT ABSTRACTS OF JAPAN, vol. 1, no. 80, 27th July 1977, page 1455 E 77; and JP-A-52 16941, 8th February 1977.

The invention is as claimed in claim 1.

The above device and its objects, features and advantages will be better understood from the following detailed description of the invention which is provided in connection with the accompanying drawings.

Fig. 1 shows a block diagram representing an embodiment of a POS terminal;

Fig. 2 shows a conversion table located in RAM 10 of Fig. 1;

Fig. 3 shows data stored in a service card;

Fig. 4 shows a flow chart representing an operation of the embodiment shown in Fig. 1;

Fig. 5 shows the service card of Fig. 2 used in the embodiment shown in Fig. 1;

Fig. 6 shows a sample of a receipt;

Fig. 7 shows another sample of a receipt;

Fig. 8 shows a perspective view representing a second embodiment of a POS terminal containing this invention;

Fig. 9 shows a structure of a RAM area used in the second embodiment;

Fig. 10 shows a memory structure of a card used in the second embodiment;

Fig. 11 shows a flow chart representing an operation of the second embodiment in a registration mode;

Fig. 12 shows a flow chart representing an operation of the second embodiment in refund mode;

Fig. 13 shows a sample of a receipt issued by the second embodiment; and

Fig. 14 shows a sample of refund slip issued by the second embodiment.

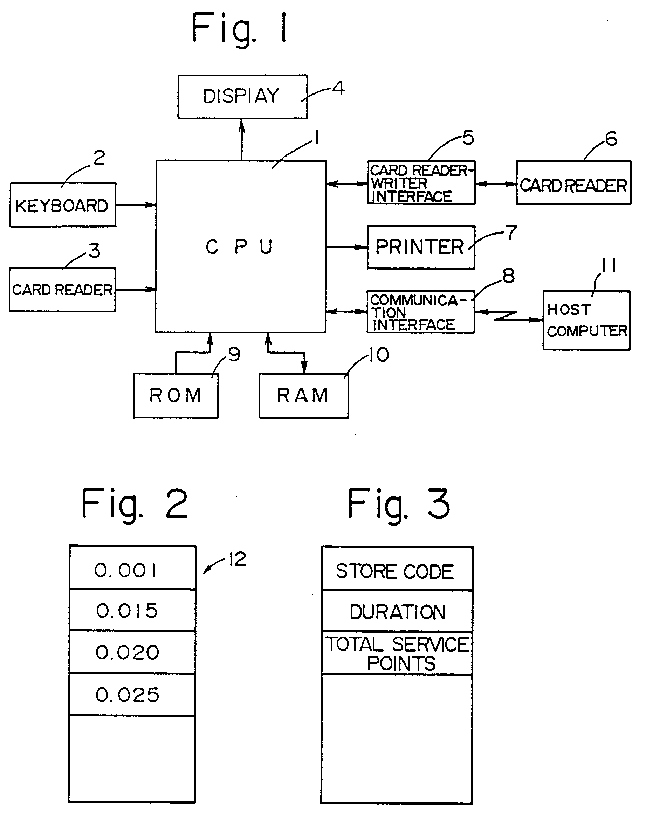

Referring to Figs. 1 and 3, an embodiment of a POS terminal device includes a CPU 1, a keyboard 2, a card reader 3, a display 4, a card reader/writer interface 5, a card reader/writer 6, a printer 7, a communication interface 8, a ROM 9, and a RAM 10. The keyboard 2 is used for entering sales data, for example, commodity prices, item numbers, and department codes for a sales transaction. The card reader 3 is used for reading data from a credit card when a customer requests a transaction using a credit card. The display 4 displays data entered by keyboard 2. The card reader/writer 6 reads data from and writes data to a magnetic strip 14 of a service card 13 which bears the data shown in Fig. 3. This data includes a store code, a time duration and a value called "total service points." The latter value represents an accumulated amount of sales by the customer over a period of time, and will be discussed in more detail below.

The communication interface 8 transmits the data of a credit card read by card reader 3 to a host computer 11 of a credit company and receives therefrom the outcome of authorization.

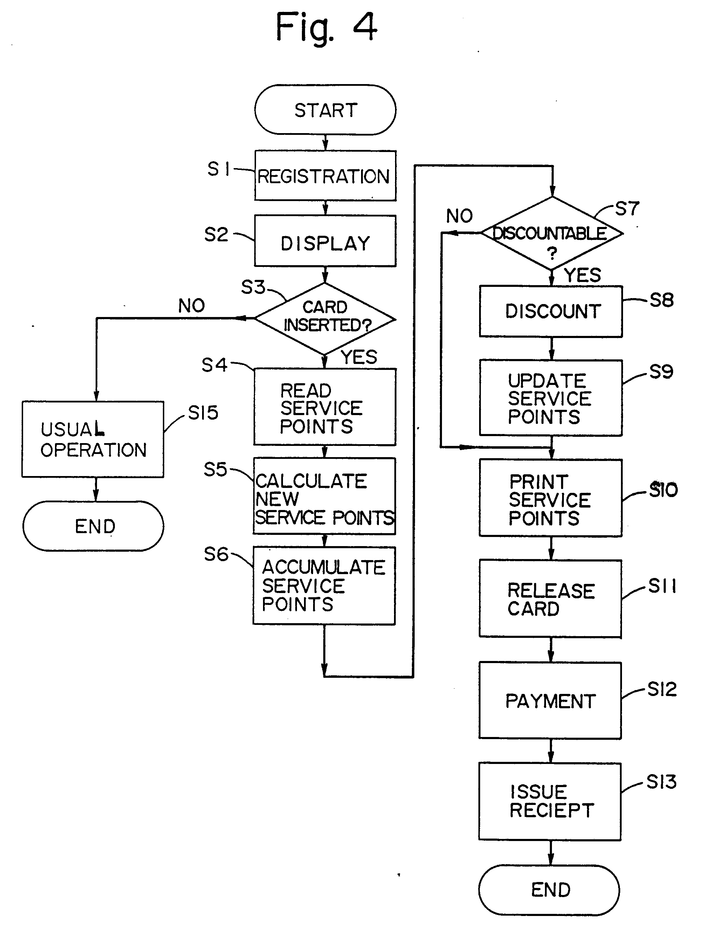

The ROM 9 has a program represented by a flow chart shown in Fig. 4. In RAM 19 are stored various kinds of data including a conversion table 12 shown in FIG. 2. The conversion table 12 stores percentages for converting from a registered sales total to "service points" which are accumulated on service card 13.

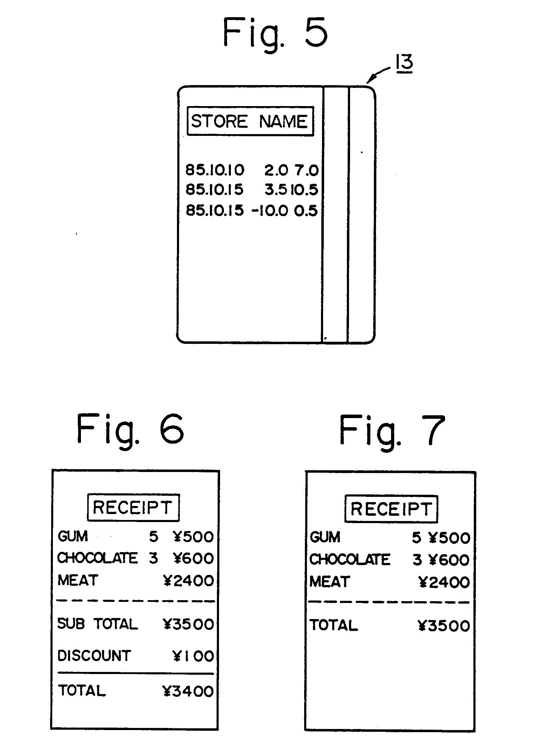

Referring to Fig. 5, service card 13 is shown as having a magnetic strip 14 in which data such as store code, duration, and total service points are stored. Also, a store name shopping date, service points at each shopping occurrence, and total service points are visibly printed on the service card 13. The service points are used to determines when certain services are offered to a customer. For purposes of further explanation, it will be assumed that when the level of service points reaches a predetermined value, a discount on a registered transaction total is given. In this situation, when the predetermined value is reached and a discount given, the accumulated total service points is correspondingly reduced, reflecting that a discount has been given, and the new service point value is then stored on service card 13. Each time a transaction is completed, the sales total for the transaction is converted to a value of service points which is added to the service points which were previously accumulated on the service card 13. The new accumulated value of service points is then checked to determine if the predetermined value is exceeded. If it is, the discounting service is conducted on the sales total for the just-completed transaction as described above and a new, lowered service point value is determined and placed on service card 13. If the new accumulated value of service points does not exceed the predetermined value, then that new accumulated value is stored on service card 13 as the total service points.

Now, referring to Fig. 4, a specific operation of the first embodiment is described in detail.

In step 1, an operator enters purchasing data into the terminal, such as commodity prices, item numbers, and department codes. Upon completing these operations, the operator presses a transaction key (not shown). The, CPU 1 causes a sales total to be registered and displayed in step 2. In step 3, the CPU 1 inquires if service card 13 has been set in card reader/writer 6. If it is the first visit by the customer to the store, he is asked whether he needs a service card. In response to his positive answer, a new service card 13 is issued for him and inserted in card reader/writer 6.

If the customer has no service card 13 and does not want a new one, there will be no service card in card reader/ writer 6 and this is detected in step S3. A conventional detector (not shown) is used for detecting the presence of service card 13 in card reader/writer 6. If no card is present, then conventional transaction processing is conducted in step S15 and the transaction is completed.

If a service card 13 has been set in card reader/writer 6, this is detected in step S3 and the store code, duration, and service points data stored on card 13 are then read in step 4. Following this, service points for the just-registered transaction are calculated in step 5, based on the total sales amount determined in step 2. In this calculation, CPU 1 selects one of a plurality of conversion rates listed in conversion table 12 according to the registered total sales amount and/or the total service points read from card 13 in step 4. For example, 0.001 may be selected as a conversion rate and multiplied by total sales amount to calculate service points corresponding to the just registered transaction.

Following this, CPU 1 adds the newly calculated service points to the total service points read from card 13 in step 6. In step 7, the CPU 1 determines whether the new total service points has reached a predetermined value for giving a discount. If yes, the sales amount total just registered is discounted by the amount determined by the value of the service points and the discounted amount is displayed in step 8. Following this, in step 9 the total service points are reduced, reflecting the giving of a discount, by being subtracted by the predetermined value of service points which must be reached before a discount is given, producing a renewed total service points value. Then, the renewed total service points are stored in service card 13 and also printed on card 13 (step 10).

If in step 7 the total calculated service points are less than the predetermined value, then the new total service points are immediately recorded on card 13 in step 10 without a discount being applied and the operating procedure proceeds to step 11.

In step 11, the service card 13 is taken from card reader/writer 6 and handed back to the customer. Following this, payment for the registered transaction is performed on the basis total sales amount, which may have been discounted, (step 12) and a receipt as shown in Fig. 6 (for a discounted case) or Fig. 7 (for a non-discounted case) is issued (step 13).

As evident from the foregoing, a service such as a discount is selectively applied depending on the value of the total service points accumulated by a customer. When the service is given, the total service points are adjusted downwardly. Since the total service points are recorded on service card 13, the paper work burden associated with keeping track of sales receipts and amounts is entirely eliminated.

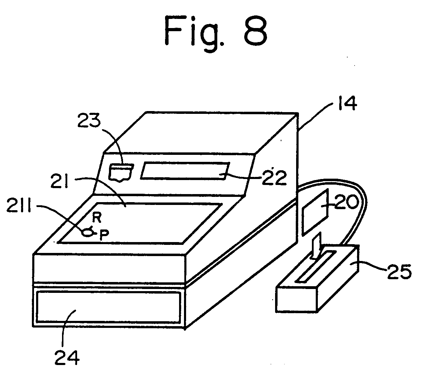

Fig. 8, shows a perspective view of a POS terminal containing a second embodiment of this invention.

In this embodiment, an accumulated sales amount is recorded on a refund card and is updated for each transaction. At the end of some predetermined period of time, e.g., one year, the customer's accumulated sales amount is read from the refund card and a refund is issued in accordance with the accumulated sales amount for the period. For example, a refund based on a percentage, e.g., 1% of the accumulated sales amount, may be given. A detailed description of this embodiment now follows.

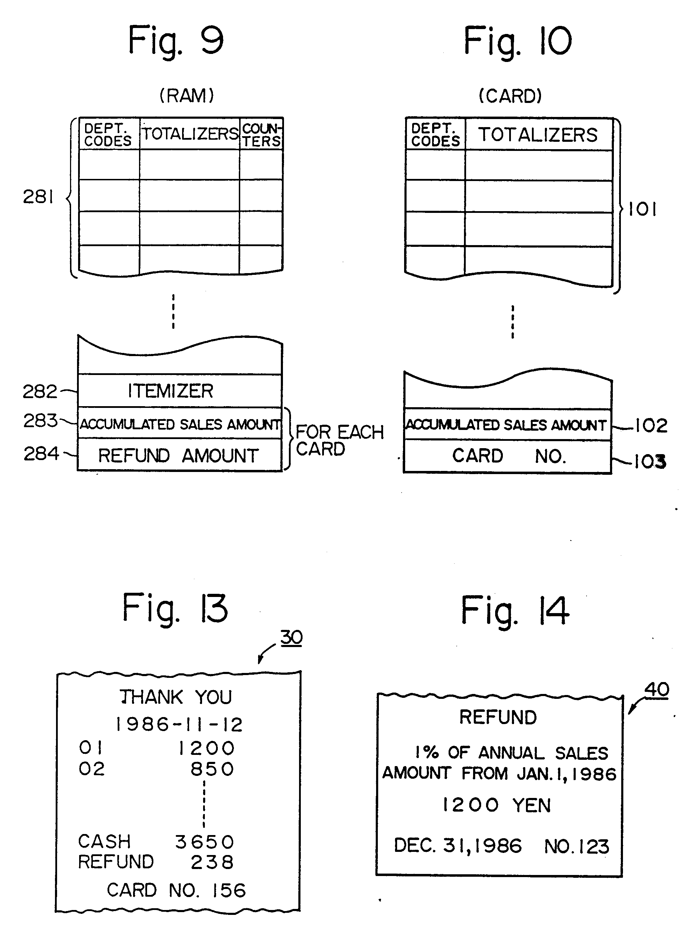

As shown in Fig. 8, the POS terminal includes a keyboard 21, a display 22, a printer 23, a cash drawer 24, and a card reader/writer 25. The keyboard 21 has a mode switch 211 for setting a mode such as registration mode R, or refund mode P. The internal structural organization of the POS terminal is the same as shown in Fig. 1. A RAM 10 of the POS terminal has a storage area configuration as shown in Fig. 9. An area 281 is assigned for commodity department codes, and corresponding totalizers and counters. An area 282 is an itemizer which totals sales amount for each customer. Areas 283 and 284 store information concerning each of a plurality of refund cards 20, such as an accumulated sales amount and a refund amount, respectively.

Fig. 10 shows a memory configuration of a refund card 20 which is used with this embodiment.

An area 101 is provided for commodity department codes and corresponding totalizers. Areas 102 and 103 are assigned for an accumulated sales amount and its card number, respectively.

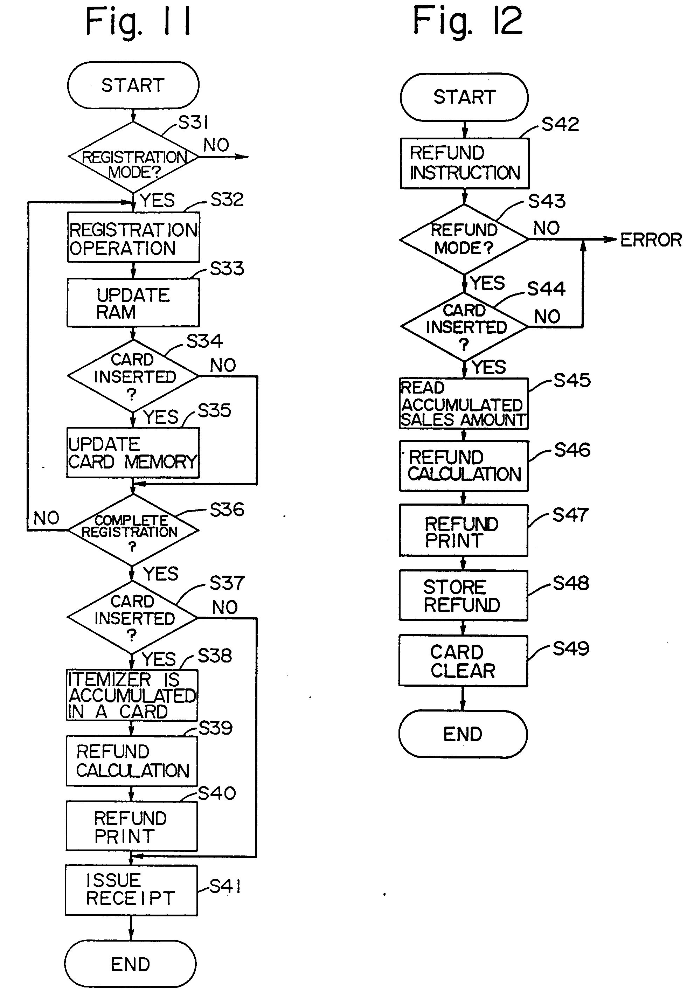

Now referring to Figs. 11 and 12, an operation of the second embodiment of the POS terminal device will be described hereinafter. Fig. 11 shows an operation in a registration mode, while Fig. 12 shows an operation in a refund mode.

In Fig. 11, CPU 1 first determines in step 3 whether the present selected mode (set by 211) is a registration mode. If not, the program jumps to other conventional routines (not shown); however, if the present mode is a registration mode, registering operations such as entering commodity prices and department codes are performed in step 32. Following these registering operations, totalizers and counters corresponding to department codes to which purchased items relate are updated in step 33. Next, CPU 1 determines in step 34 if a refund card 20 has been set in card reader/writer 25 (corresponding to the card reader/writer 6 of Fig. 1). If it has, then totalizer area 101 of refund card 20 is updated in step 35 in accordance with data concerning the purchased items. If card 20 is not found in card reader/writer 25, step 35 is skipped and the procedure proceeds to step 36, where the CPU 1 determines if all purchased items have been registered. If not, a cycle of steps 2 to 5 is repeated until the last commodity data has been input and a yes response is received in step 36.

After this, CPU 1 inquires again in step 37 whether the card 20 is inserted into reader/writer 25. If the card is not inserted the CPU 1 proceeds to step 11 where a usual receipt is issued. If the card has been inserted in card reader/writer 25, as detected in step 37, the accumulated sales amount 102 of the refund card 20 (Fig. 10) is augmented in step 38 by the amount stored in itemizer area 282 (Fig. 9). Thus, upon completion of each transaction, the accumulated sales amount 102 on refund card 20 is updated by adding the sales amount of the new transaction to the old accumulated sales amount.

Following this, in step 39, a refund amount is calculated based on the updated accumulated sales amount 102. This refund calculation is performed so that a customer may know how much refund he is presently entitled to based on his accumulated sales amount. Following this, in step 40 the CPU 1 causes the calculated refund amount to be printed together with its card number on a transaction receipt and the receipt (shown in Fig. 13) is issued in step 41. Thus, whenever a customer goes shopping, his sales amount is accumulated in area 102 of his card and a refund to which he is entitled is calculated based on the updated sales amount and printed out on a receipt for his information.

Fig. 12 shows the operational steps for giving a customer his refund. Referring to Fig. 12, when an operator enters a refund instruction through a keyboard 21 in step 42, CPU 1 inquires in step 43 whether the present mode is a refund mode and whether a refund card has been inserted in card reader/writer 6 (step 44). If a yes response is received in the both steps 13 and 14, the accumulated sales amount from area 102 and its card number from area 103 are read out of the card and the accumulated sales amount is stored in the RAM area 283 corresponding to its card number in step 45. A refund is then calculated based on the readout accumulated sales amount in step 46 and the amount of refund is printed on a refund slip shown in Fig. 14 in step 47. The calculated refund is also stored in the RAM area 284 corresponding to its card number in step 48 and the accumulated sales amount area 102 on the card is then cleared, i.e., reset to zero, in step 49.

A slip 40 as shown in Fig. 14 is used as a refund slip and a customer receiving this slip is entitled to a refund according to the amount printed thereon. This slip 40 differs from an usual receipt 30, so that these forms are not confused in their use.

The second embodiment of the invention is particularly useful for issuing periodic refunds to a customer based on his accumulated sales amount. It too eliminates burdensome paper work for the store and customer in keeping track of the accumulated sales amount.

In both the first and second embodiments the customer's card contains data representing an accumulated sales amount. In the first embodiment the data is in the form of accumulated "total service points", while in the second embodiment it is in the form of an actual monetary amount. It should be apparent that either format can be used with either embodiment.

The invention is not limitied by the foregoing description, but is only limited by the scope of the appended claims.

**Claims**

1.   A POS terminal device for use with a card, comprising:

data input means (2, 21) for entering sales data concerning items purchased by a customer,

calculation means (1) for calculating a sales total according to the entered sales data,

card reader/writer means (6, 25) for reading and writing data representing accumulated sales from and to a card (13, 20) which has an area for storing said data representing accumulated sales,

means (1) for augmenting data representing accumulated sales read from said card with data representing said calculated sales total, characterized by

means for determining an amount of money to be credited to a customer based on the data representing accumulated sales,

means for printing data representing the amount of money currently to be credited to a customer on a receipt issued on any sales transaction made using said card.

2. A POS terminal device according to claim 1, wherein said data representing said amount of money to be credited is in the form of an accumulated total service points, wherein the number of accumulated service points corresponds to the amount of accumulated sales.

3. A POS terminal device according to claim 1 or 2, further comprising means for reducing the value of said data representing said accumulated sales when said amount of money to be credited is actually credited and for causing said card reader/writer means (6) to write the reduced data representing said accumulated sales on said card (13).

4. A POS terminal device according to claim 3, wherein said data representing said accumulated sales is reduced by a value corresponding to a predetermined value.

5. A POS terminal device according to anyone of the preceding claims, further comprising means (7, 23) for printing said data representing said accumulated sales on said card (13, 20).

6. A POS terminal device according to anyone of the claims 2 to 5, further comprising means for printing said total service point value on said card (13).

7. A POS terminal device according to anyone of the preceding claims, further comprising means responsive to a refund instruction for causing said card reader/writer means (25) to read said data representing accumulated sales from a card (20), means for calculating a refund based on said data representing accumulated sales, means (23) for printing a refund record (30, 40) representing a calculated refund, and means for causing said card reader/writer (25) to write predetermined data on said card (20) as said data representing said accumulated sales.

8. A POS terminal device according to claim 7, wherein said predetermined data represents a zero value of accumulated sales.

9. A POS terminal device according to anyone of the claims 3 to 8, wherein said printed record is in the form of a refund slip (40).

**Revendications**

1. Un dispositif de terminal de point de vente, à utiliser avec une carte, comprenant:

un moyen (2, 21) d'entrée de donnée pour entrer une donnée de ventes concernant des articles achetés par un client,

un moyen de calcul (1) pour calculer un total de ventes selon la donnée de ventes entrée,

un moyen (6, 25) de lecture/écriture de carte pour lire et écrire, dans une carte (13, 20) comportant une zone de mémorisation de ladite donnée représentant des ventes accumulées, une donnée représentant des ventes accumulées,

un moyen (1) pour augmenter, de la donnée représentant ledit total de ventes calculé, la donnée représentant les ventes accumulées lue dans ladite carte,

caractérisé par

un moyen de détermination d'un montant d'argent à créditer à un client sur la base de la donnée représentant les ventes totales accumulées,

un moyen d'impression de donnée représentant le montant d'argent à créditer actuellement à un client sur un reçu émis pour toute transaction de ventes effectuée en utilisant ladite carte.

2. Un dispositif de terminal de point de vente selon la revendication 1, dans lequel ladite donnée représentant le montant d'argent à créditer prend la forme d'un total accumulé de points de service où le nombre de points de service accumulés correspond au montant des ventes accumulées.

3. Un dispositif de terminal de point de vente selon la revendication 1 ou 2, comprenant en outre un moyen pour réduire la valeur de ladite donnée représentant lesdites ventes accumulées lorsque ledit montant d'argent à créditer est réellement crédité et pour amener ledit moyen (6) de lecture/écriture de carte à écrire sur ladite carte (13) la donnée réduites représentant lesdites ventes accumulées.

4. Un dispositif de terminal de point de vente selon la revendication 3, dans lequel ladite donnée représentant lesdites ventes accumulées est réduite d'une valeur correspondant à une valeur prédéterminée.

5. Un dispositif de terminal de point de vente selon l'une quelconque des revendications précédentes comprenant en outre un moyen (7, 23) destiné à imprimer sur ladite carte (13, 20) ladite donnée représentant lesdites ventes accumulées.

6. Un dispositif de terminal de point de vente selon l'une quelconque des revendications 2 à 5, comprenant en outre un moyen destiné à imprimer sur ladite carte (13) ladite valeur total de points de service.

7. Un dispositif de terminal de point de vente selon l'une quelconque des revendications précédentes, comprenant en outre un moyen sensible à une instruction de remboursement pour amener ledit moyen (25) de lecture/écriture de carte à lire dans une carte (20) ladite donnée représentant les ventes accumulées, un moyen de calcul d'un remboursement sur la base de ladite donnée représentant les ventes accumulées, un moyen (23) destiné à imprimer un enregistrement de remboursement (30, 40) représentant un remboursement calculé, et un moyen destiné à amener ledit dispositif de lecture/écriture de carte (25) à écrire sur ladite carte (20) une donnée prédéterminée en tant que dite donnée représentant lesdites ventes accumulées.

8. Un dispositif de terminal de point de vente selon la revendication 7, dans lequel ladite donnée prédéterminée représente une valeur nulle de ventes accumulées.

9. Un dispositif de terminal de point de vente selon l'une quelconque des revendications 3 à 8, dans lequel ledit enregistrement imprimé prend la forme d'une fiche de remboursement (40).

**Patentansprüche**

1. POS-Terminalvorrichtung zur Verwendung mit einer Karte, mit

Dateneingabemitteln (2, 21) zur Eingabe von Verkaufsdaten, die von einem Kunden gekaufte Artikel betreffen,

Berechnungsmitteln (1) zum Berechnen einer Verkaufsgesamtsumme gemäß den eingegebenen Verkaufsdaten,

Kartenleser/schreibermitteln (6, 25) zum Lesen und Schreiben von Daten, die aufgelaufene Verkäufe betreffen, aus und in eine Karte (13, 20), welche einen Bereich zum Speichern der aufgelaufene Verkäufe darstellenden Daten aufweist,

Mitteln (1) zum Vergrößern von aus der Karte ausgelesenen, aufgelaufene Verkäufe darstellenden Daten um die berechnete Gesamtverkaufssumme darstellende Daten, gekennzeichnet durch

Mittel zum Bestimmen eines einem Kunden zu kreditierenden Geldbetrags auf der Grundlage der die aufgelaufenen Verkäufe darstellenden Daten,

Mittel zum Drucken von Daten, welche den gegenwärtig einem Kunden zu kreditierenden Geldbetrag darstellen, auf einen Bon, der bei unter Verwendung der Karte durchgeführten Verkaufstransaktionen ausgegeben wird.

2. POS-Terminalvorrichtung nach Anspruch 1, bei welcher die den zu kreditierenden Geldbetrag darstellenden Daten in Form von aufgelaufenen Gesamtservicepunkten vorliegen, wobei die Anzahl von aufgelaufenen Servicepunkten dem Betrag aufgelaufener Verkäufe entspricht.

3. POS-Terminalvorrichtung nach Anspruch 1 oder 2, welche ferner Mittel zum Vermindern des Werts der die aufgelaufenen Verkäufe darstellenden Daten bei tatsächlicher Gutschrift des zu kreditierenden Geldbetrags und zum Bewirken, daß die Kartenleser/schreibermittel (6) die verminderten die aufgelaufenen Käufe darstellenden Daten in die Karte (13) schreiben, aufweist.

4. POS-Terminalvorrichtung nach Anspruch 3, bei welcher die die aufgelaufenen Verkäufe darstellenden Daten um einen Wert vermindert werden, der einem bestimmten Wert entspricht.

5. POS-Terminalvorrichtung nach irgendeinem der vorstehenden Ansprüche, welche ferner Mittel (7, 23) zum Drucken der die aufgelaufenen Verkäufen darstellenden Daten auf die Karte (13, 20) aufweist.

6. POS-Terminalvorrichtung nach irgendeinem der Ansprüche 2 bis 5, welche ferner Mittel zum Drucken des Gesamtservicepunktwerts auf die Karte (13) aufweist.

7. POS-Terminalvorrichtung nach irgendeinem der vorstehenden Ansprüche, welche ferner auf einen Rückerstattungsbefehl ansprechende Mittel zum Bewirken, daß die Kartenleser/schreibermittel (25) die aufgelaufene Verkäufe darstellenden Daten aus der Karte (20) auslesen, Mittel zum Berechnen einer Rückerstattung auf der Grundlage der die aufgelaufenen Verkäufe darstellenden Daten, Mittel (23) zum Drucken einer Rückerstattungsaufzeichnung (30, 40), welche eine berechnete Rückerstattung darstellt, und Mittel zum Bewirken, daß der Kartenleser/schreiber (25) bestimmte Daten auf die Karte (20) als die die aufgelaufenen Verkäufe darstellenden Daten schreibt, aufweist.

8. POS-Terminalvorrichtung nach Anspruch 7, bei welcher die bestimmten Daten einen Null-Wert von aufgelaufenen Verkäufen darstellen.

9. POS-Terminalvorrichtung nach irgendeinem der Ansprüche 3 bis 8, bei welcher die gedruckte Aufzeichnung die Form eines Rückerstattungsstreifens (40) hat.

# Fig. 1

# Fig. 2

# Fig. 3

# Fig. 4

```
                    ┌─────────┐
                    │  START  │
                    └────┬────┘
                         │
        S1 ─┐    ┌───────▼────────┐
            └───│  REGISTRATION   │
                 └───────┬────────┘
                         │
        S2 ─┐    ┌───────▼────────┐
            └───│    DISPLAY      │
                 └───────┬────────┘
                         │
        S3 ─┐          ◇─▼─◇
     NO      └─────── CARD
  ┌──────────────── INSERTED? ◇
  │                  ◇───┬───◇
  │                   YES │
  │         S4 ─┐  ┌──────▼──────┐
  │             └─│    READ      │
┌─▼──────┐         │   SERVICE   │
│ USUAL  │─ S15    │   POINTS    │
│OPERATION│        └──────┬──────┘
└───┬────┘                │
    │        S5 ─┐  ┌──────▼──────┐
┌───▼───┐        └─│ CALCULATE    │
│  END  │           │ NEW          │
└───────┘           │SERVICE POINTS│
                    └──────┬──────┘
             S6 ─┐  ┌──────▼──────┐
                 └─│ ACCUMULATE   │
                    │  SERVICE     │
                    │  POINTS      │
                    └──────┬──────┘
```

```
        ┌──────────────────────────┐
        │                          │
   NO   │            ◇─────◇       S7
 ┌──────┼───────── DISCOUNTABLE ◇──┘
 │      │            ◇──┬──◇
 │      │             YES │
 │      │      ┌──────────▼───────┐
 │      │      │    DISCOUNT      │─ S8
 │      │      └──────────┬───────┘
 │      │                 │
 │      │      ┌──────────▼───────┐
 │      │      │    UPDATE        │─ S9
 │      │      │    SERVICE       │
 │      │      │    POINTS        │
 │      │      └──────────┬───────┘
 └──────┼─────────────────┤
        │      ┌──────────▼───────┐
        │      │    PRINT         │─ S10
        │      │    SERVICE       │
        │      │    POINTS        │
        │      └──────────┬───────┘
        │      ┌──────────▼───────┐
        │      │    RELEASE       │─ S11
        │      │    CARD          │
        │      └──────────┬───────┘
        │      ┌──────────▼───────┐
        │      │    PAYMENT       │─ S12
        │      └──────────┬───────┘
        │      ┌──────────▼───────┐
        │      │    ISSUE         │─ S13
        │      │    RECIEPT       │
        │      └──────────┬───────┘
        │            ┌────▼────┐
        │            │   END   │
        │            └─────────┘
```

# Fig. 5

_13_

| STORE NAME |
| --- |

```
85.10.10    2.0 7.0
85.10.15    3.5 10.5
85.10.15  -10.0 0.5
```

# Fig. 6

| RECEIPT |
| --- |

| | | |
| --- | --- | --- |
| GUM | 5 | ¥500 |
| CHOCOLATE | 3 | ¥600 |
| MEAT | | ¥2400 |
| – – – – – – – – – – | | |
| SUB TOTAL | | ¥3500 |
| DISCOUNT | | ¥100 |
| – – – – – – – – – – | | |
| TOTAL | | ¥3400 |

# Fig. 7

| RECEIPT |
| --- |

| | | |
| --- | --- | --- |
| GUM | 5 | ¥500 |
| CHOCOLATE | 3 | ¥600 |
| MEAT | | ¥2400 |
| – – – – – – – – – – | | |
| TOTAL | | ¥3500 |

# Fig. 8

# Fig. 9

(RAM)

| DEPT.<br>CODES | TOTALIZERS | COUN-<br>TERS |
|---|---|---|
| | | |
| | | |
| | | |
| | | |

281

ITEMIZER — 282

ACCUMULATED SALES AMOUNT — 283

REFUND AMOUNT — 284

} FOR EACH CARD

# Fig. 10

(CARD)

| DEPT.<br>CODES | TOTALIZERS |
|---|---|
| | |
| | |
| | |
| | |

101

ACCUMULATED SALES AMOUNT — 102

CARD    NO. — 103

# Fig. 13

30

THANK YOU

1986-11-12

01        1200
02         850

CASH      3650
REFUND     238

CARD NO. 156

# Fig. 14

40

REFUND

1% OF ANNUAL SALES
AMOUNT FROM JAN.1,1986

1200 YEN

DEC. 31,1986   NO.123

# Fig. II

START

S31
REGISTRATION MODE? — NO →

YES — S32

REGISTRATION OPERATION

S33
UPDATE RAM

S34
CARD INSERTED ? — NO →

YES — S35

UPDATE CARD MEMORY

S36
NO — COMPLETE REGISTRATION ?

YES — S37

CARD INSERTED ? — NO →

YES — S38

ITEMIZER IS ACCUMULATED IN A CARD

S39
REFUND CALCULATION

S40
REFUND PRINT

ISSUE RECEIPT — S41

END

# Fig. I2

START

S42
REFUND INSTRUCTION

S43
REFUND MODE? — NO → ERROR

YES — S44

CARD INSERTED ? — NO →

YES

READ ACCUMULATED SALES AMOUNT — S45

REFUND CALCULATION — S46

REFUND PRINT — S47

STORE REFUND — S48

CARD CLEAR — S49

END